# EUROPÄISCHE PATENTSCHRIFT

(11) **EP 4 500 488 B1**
(45) Veröffentlichungstag und Bekanntmachung des Hinweises auf die Patenterteilung: **19.11.2025**
(21) Anmeldenummer: 23727272.9
(22) Anmeldetag: 12.05.2023
(51) Int. Cl.: G06V 20/52, G06V 40/10

(54) **ÜBERWACHUNGSSYSTEM MIT EINEM PERSONENDETEKTOR**
MONITORING SYSTEM WITH A PERSON DETECTOR
SYSTÈME DE SURVEILLANCE DOTÉ D'UN DÉTECTEUR DE PERSONNES

(30) Priorität: 13.07.2022 EP 22184577
(43) Veröffentlichungstag der Anmeldung: 05.02.2025
(73) Patentinhaber: Siemens Aktiengesellschaft, 80333 München (DE)
(72) Erfinder: WALTER, Maximilian, 90408 Nürnberg (DE)
(74) Vertreter: Siemens Patent Attorneys
(86) Internationale Anmeldenummer: PCT/EP2023/062712
(87) Internationale Veröffentlichungsnummer: WO 2024/012746

(56) Entgegenhaltungen:
- EP-A1- 3 588 365
- EP-A1- 3 709 106
- EP-B1- 1 964 063
- EP-B1- 2 825 812
- DE-A1- 102019 124 301
- DE-B3- 102020 133 784

## Beschreibung

Die Erfindung betrifft ein Überwachungssystem mit einem Personendetektor, welcher ausgestaltet ist mit einem bildgebenden Sensor, vorzugsweise mit einer Kamera zur Aufnahme von digitalen Bilddateien oder einem Laser-Sensorsystem oder mit einer TOF-Kamera (Time of Flight) zur Aufnahme von Punktewolken und mit einer Auswerteeinheit, welche ausgestaltet ist die Bilddateien oder die Punktewolken auszuwerten und eine Positionsangabe einer in einem Überwachungsbereich erkannten Person auszugeben.

Aus der Literatur sind verschiedene Verfahren und Vorrichtungen zur Erkennung und Lokalisierung von Personen bekannt, unter anderem unter Verwendung von Kameras, deren Videostrom Bild für Bild von einem künstlichen Neuronalen Netzwerk analysiert wird. Das Neuronale Netz kann Positionen und eine Ausdehnung (Länge, Höhe) der erkannten Personen in einem 2D-Bild liefern. Aus dieser Position kann dann eine tatsächliche Position der Person ermittelt werden.

Ein Einsatz z.B. von Industrierobotern ohne eine trennende Schutzeinrichtung in der Nähe des Menschen, erfordert eine geeignete sensorische Umgebungserfassung, um Personen sowie andere Objekte sicher detektieren und damit in einem drohenden Kollisionsfall angepasst reagieren zu können.

In der Dissertation von Christina Ramer "Arbeitsraumüberwachung und autonome Bahnplanung für ein sicheres und flexibleres Roboter-Assistenz-System in der Fertigung" werden verschiedene Verfahren zur Personenerkennung mit der Auswertung von Kamerabildern mittels Neuronaler Netze beschrieben.

Die EP 3 709 106 A1 offenbart ein Sicherheitssystem und ein Verfahren zum Absichern einer Maschine mit einem ersten Sensor und einem zweiten Sensor.

Die DE 10 2020 133 784 B4 zeigt ein Verfahren mit einem Sicherheitssystem und ein Sicherheitssystem zur Lokalisierung von mindestens einem Objekt, mit mindestens einer Steuer- und Auswerteeinheit und einem Funkortungssystem.

Die EP 2 825 812 B1 beschreibt eine Vorrichtung zum Absichern eines gefährlichen Arbeitsbereichs einer automatisiert arbeitenden Maschine, mit zumindest einer Sensoreinheit, die in definierten Zeitintervallen jeweils ein aktuelles 3D Bild von dem Arbeitsbereich liefert, und einen definierten Schutzbereich überwacht.

In der EP 3 588 365 A1 wird eine sichere mehrkanalige Auswertung dadurch verbessert, dass für eine Überprüfung der Integrität der Verarbeitungskanäle nicht die gesamten Daten der Verarbeitungsergebnisse verglichen werden müssen, sondern wenige Kennwerte genügen, welche die Information repräsentieren.

Die EP 1 964 063 B1 zeigt ein Verfahren zum Konfigurieren einer Überwachungseinrichtung zum Überwachen eines Raumbereichs, insbesondere zum fehlersicheren Überwachen des Arbeitsbereichs einer automatisiert arbeitenden Maschine oder Anlage.

Im Sinne der Erfindung wird unter fehlersicherer Automatisierungssysteme ein Industriecontroller verstanden, welcher nach der Norm IEC62061 zertifiziert ist und damit als eine auf funktionale Sicherheit ausgelegte Steuerung ausgestaltet ist.

Fehlersichere Automatisierungssysteme steuern Prozesse, die als Ergebnis von unerwartetem Betriebsverhalten oder eines Ausfalls sofort einen sicheren Zustand einnehmen können. Dies sind fehlersichere Steuerungsprozesse, bei denen ein sofortiges Herunterfahren in einen sicheren Zustand keine Gefahr für Menschen oder die Umwelt darstellt. Fehlersichere Systeme gehen über das herkömmliche Sicherheits-Engineering hinaus und aktivieren weitreichende intelligente Systeme, die bis zu den elektrischen Antrieben und Messsystemen reichen. Der Anwender setzt fehlersichere Systeme in Anwendungen mit erhöhten Sicherheitsanforderungen ein. Dank der verbesserten Fehlererkennung und -lokalisierung in fehlersicheren Systemen mittels detaillierter Diagnoseinformationen kann die Produktion nach einer sicherheitsbezogenen Unterbrechung schnell wieder aufgenommen werden.

Die nach dem Stand der Technik bekannten Personendetektoren erreichen heute bereits eine sehr hohe Qualität. Allerdings werden Anforderungen, die sich aus dem Kontext der "funktionalen Sicherheit" ergeben, nicht erfüllt. Zu diesen Anforderungen zählt eine sichere Diagnose, die alle denkbaren Fehler in einem Überwachungssystem und deren Subsystemen, wie z.B. Kameras, Laserscanner, künstliche Neuronale Netzwerke, Kommunikationsstrecken, usw. aufdeckt.

Es ist daher eine Aufgabe der Erfindung ein Überwachungssystem bereitzustellen, welches es ermöglicht, das Auftreten von Fehlern in z.B. Kamera-basierten Personendetektoren sicher zu erkennen.

Die Aufgabe wird für das eingangs genannte Überwachungssystem durch die Merkmale des Anspruchs 1 gelöst. Die Diagnoseeinheit ist mit einem ersten Eingangskanal um die Positionsangabe zu empfangen und mit einem ersten Ausgang für eine geprüfte Positionsangabe (P), z.B. ein Bestätigungssignal der Positionsangabe, der erkannten Person ausgestaltet. Die Diagnoseeinheit weist einen zweiten Ausgang für ein Fehlersignal auf, und die Diagnoseeinheit ist ausgestaltet mit einer Prüfeinheit die Ausgabe der Positionsangabe der erkannten Person mit einer Mehrzahl an Plausibilitätskriterien auf Plausibilität zu überprüfen, weiterhin ist die Diagnoseeinheit ausgestaltet für den Fall, dass wenn mindestens ein Plausibilitätskriterium verletzt ist, einen Fehler zu erkennen und das Fehlersignal an dem zweiten Ausgang auszugeben.

Um das Auftreten von Fehlern in einem Kamera-basierten Personendetektor sicher zu erkennen, wird zusätzlich zu der ersten Komponente des Personendetektors, nämlich der Kamera und der zweiten Komponente, nämlich der Auswerteeinheit, vorzugsweise ausgebildet als ein künstliches neuronales Netz, eine dritte Komponente eingefügt, nämlich die Diagnoseeinheit. Die Diagnoseeinheit ist dazu ausgestaltet die Ausgaben des künstlichen neuronalen Netzes (Auswerteeinheit) auf Plausibilität zu überprüfen. Vorzugsweise ist diese Diagnoseeinheit in sicherer Technik realisiert, z.B. mit einer auf Fehlersicherheit ausgestalteten speicherprogrammierbaren F-Steuerung, so das angenommen werden kann, dass sämtliche Fehler der Diagnoseeinheit selbst ebenfalls beherrscht werden.

Auf der Diagnoseeinheit können z.B. folgende Plausibilitätsprüfungen durchgeführt werden:
a) Erkennen von Personen, die in der Mitte eines Bildes erscheinen oder verschwinden,
b) sprunghafte Positionsänderungen,
c) Geschwindigkeiten von Personen, die größer sind als 2m/s,
d) Personen in Bereichen mit Zutrittsbeschränkungen (z.B. hinter einem Zaun),
e) Personen an Positionen, die physikalisch unmöglich sind (z.B. in der Luft schwebend).

Diese Prüfungen machen es sich zu Nutze, dass das künstliche neuronale Netz zustandslos arbeitet und Bild für Bild getrennt analysiert wird. Daher können Fehler im künstlichen neuronalen Netz oder in der Kamera in vielen Fällen daran erkannt werden, dass das gelieferte Ergebnis in der Sequenz inkonsistent wird.

Schlägt mindestens eine der Plausibilitätsprüfungen fehl, hat die Diagnoseeinheit einen Fehler erkannt. Sie kann dann entscheiden, diesen Fehler zunächst zu tolerieren (z.B. wenn eine Person in genau einem Bild fehlt, aber unmittelbar darauf an derselben Stellen wieder detektiert wird), oder der nachgelagerten Entscheidungsfindung einen gefährlichen Ausfall des Erkennens zu signalisieren.

Das Erkennen von Fehlern wird in einer weiteren Ausgestaltung dadurch verbessert, dass die Diagnoseeinheit weiterhin ausgestaltet ist, Zusatzinformationen entgegenzunehmen und auszuwerten und in die Plausibilitätsprüfung mit einzubeziehen.

Erfindungsgemäß ist das Überwachungssystem mit einer Zuweisungseinheit ausgestaltet, welche ausgestaltet ist in einem Verbund von einem ersten Personendetektor und dem zweiten Personendetektor ein Kontrollsignal von der Diagnoseeinheit entgegenzunehmen, wobei der erste Personendetektor mit einem ersten bildgebenden Sensor, vorzugsweise einer ersten Kamera zur Aufnahme von digitalen Bilddateien oder einem ersten Laser-Sensorsystem zur Aufnahme von Punktewolken, und mit einer ersten Auswerteeinheit ausgestaltet ist, der zweite Personendetektor mit einem zweiten bildgebenden Sensor, vorzugsweise einer zweiten Kamera zur Aufnahme von digitalen Bilddateien oder einem zweiten Laser-Sensor-System zur Aufnahme von Punktewolken, und mit einer zweiten Auswerteeinheit ausgestaltet ist, die Diagnoseeinheit ist dabei ausgestaltet das Kontrollsignal derart zu generieren, dass eine Zuordnung von dem ersten bildgebenden Sensor, vorzugsweise der ersten Kamera bzw. dem ersten Laser-Sensor-System, zu der ersten Auswerteeinheit oder der zweiten Auswerteeinheit oder eine Zuordnung von dem zweiten bildgebenden Sensor, vorzugsweise der zweiten Kamera bzw. dem zweiten Laser-Sensor-System, zu der ersten Auswerteeinheit oder der zweiten Auswerteeinheit von dem Kontrollsignal vorgegeben ist, und weiterhin ist die Diagnoseeinheit ausgestaltet, mit dieser Vorgabe nach einer Änderung der Zuordnung mit einer Erwartungshaltung eine vierte Zusatzinformation zu generieren, denn die Diagnoseeinheit ist derart ausgestaltet, dass nach jedem Wechsel der Zuordnung eine Erwartungshaltung aus den erkannten Positionsangaben aus der vorangegangenen Zuordnung mit den erkannten Positionsangaben aus der gerade bestehenden Zuordnung verglichen wird, stimmt die Erwartungshaltung nicht überein, wird das Fehlersignal ausgegeben.

So kann die Diagnoseeinheit z.B. zusätzliche Informationen über die Anzahl der sich im zu überwachenden Bereich befindenden Personen dazu heranziehen, um mit einer Plausibilitätsprüfung eventuell einen Fehler zu erkennen. Z.B. können die Personen am Eingang durch ein Drehkreuz gezählt werden. Die Diagnoseeinheit verfügt somit über eine Erwartungshaltung die als zusätzliche Diagnose verwendet wird. Befinden sich beispielsweise zwei Personen im zu überwachenden Bereich, muss der Personendetektor auch immer genau zwei Personen melden, andernfalls wird u.U. ein gefährlicher Ausfall der Funktion des Personendetektors signalisiert. Bei größeren zu überwachenden Bereichen (z.B. eine gesamte Fabrikhalle oder ein Blick auf Bereiche die von größeren Objekten verdeckt sind) müssen mehrere Personendetektoren zusammengeschaltet werden, die insgesamt den gesamten Bereich abdecken. Für sämtliche Personendetektoren kann dann eine gemeinsame Diagnoseeinheit verwendet werden. Diese vergleicht in diesem Fall die Zahl der insgesamt erkannten Personen mit der bekannten Personenzahl. Demnach ist die Diagnoseeinheit dazu ausgestaltet, als eine erste Zusatzinformation eine Anzahl der sich im zu überwachenden Überwachungsbereich befindenden Personen auszuwerten.

Das Überwachungssystems sieht einen weiteren Personendetektor vor, wobei die Diagnoseeinheit ausgestaltet ist, als eine zweite Zusatzinformation einen Kreuzvergleich zwischen einem ersten Kanal von einem ersten Personendetektor und einem zweiten Kanal von einem zweiten Personendetektor für die Positionsdaten heranzuziehen, wobei die Kanäle diversitär zueinander ausgestaltet sind.

Mit dieser technischen Lösung können zufällige Hardwarefehler in einzelnen Komponenten (z.B. Kameras, oder KI-Hardware) durch die Verwendung mehrerer Erkennungskanäle und eines Kreuzvergleich in der Diagnoseeinheit erkannt werden. Der Kreuzvergleich prüft, ob die zusammengehörigen Kanäle dieselbe Anzahl von Personen an denselben Positionen liefern. Andernfalls wird der Ausfall eines Personendetektors signalisiert.

Vorteilhafterweise verfügen die einzelnen Kanäle über einen möglichst hohen Grad an Diversität. Z.B.
a) Die Kameras der einzelnen Kanäle betrachten die Szene aus unterschiedlichen Blickwinkeln, z.B. von der Seite (Wandmontage) und von oben (Deckenmontage).
b) Es werden Kameras und künstliche neuronale Netzwerkhardware verschiedener Hersteller verwendet.
c) Die auf den künstlichen neuronalen Netzen laufenden Modelle wurden mit unterschiedlichen Trainingsdaten trainiert und getestet.
d) Die auf den künstlichen neuronalen Netzwerken laufenden Modelle zur Objekterkennung sind unterschiedlich (z.B. YOLO, versus FairMOT).
e) Es werden unterschiedliche Messprinzipien eingesetzt, z.B. RGB-Kamera versus Infrarotkamera, Eventkamera versus Framekamera, Kamera versus Radar etc..

Durch die Diversität lassen sich nicht nur zufällige Hardwarefehler, sondern auch systematische Fehler erkennen.

Noch einen weiteren Grad an Sicherheit erreicht man dadurch, dass die Diagnoseeinheit nun ausgestaltet ist, ein Phantombild zu generieren, dabei weist der Personendetektor eine Bildmischeinheit auf, welche ausgestaltet ist, das Phantombild in die Bilddateien einzublenden, wodurch ein aktuelles Kamerabild durch das Phantombild überlagert wird und damit eine dritte Zusatzinformation auswertbar ist.

Für jeden einzelnen Kanal lässt sich die korrekte Funktionsweise der Auswerteeinheit (künstliche Intelligenz, künstliche neuronale Netzwerke KNN-Hardware) sowie des dort konfigurierten Modells durch das Einspeisen von sogenannten Phantomen im laufenden Betrieb prüfen. Ein Phantom kann vorzugsweise auf der Diagnoseeinheit generiert werden und besteht zunächst aus einer Position und gegebenenfalls weiteren Kriterien, wie Personentyp (z.B. männlich, weiblich, divers), Kleidung (Laborkittel, Overall), mitgeführter Ausrüstung (z.B. Schutzhelm, Handwagen) ausgeführte Tätigkeit (z.B. Gehen, Stehen, Knien). Diese Informationen werden von der Diagnoseeinheit an einen Phantombildgenerator gesendet, der daraus ein fotorealistisches Abbild (2D-Grafik) generiert. Dieses Abbild, also das Phantombild, wird mit Hilfe einer Bildmischeinheit in das tatsächliche Kamerabild eines Kanals eingeblendet, d.h., das Kamerabild wird durch das Phantombild teilweise überlagert. Das dem Kanal zugehörige künstliche neuronale Netzwerk sollte dieses Phantom korrekt erkennen, was von der Überwachungseinheit bzw. der Diagnoseeinheit nun als Zusatzinformation sicher überprüft werden kann. Sollte das Phantom bzw. das Phantombild nicht erkannt werden, kann wiederum ein Ausfall des Personendetektors signalisiert werden.

Vorteilhafterweise ändert sich die Position des Phantoms in dem Phantombild sowie zusätzliche Kriterien regelmäßig (z.B. könnte für jedes Bild ein unterschiedliches Phantom verwendet werden oder das Phantom ändert sich nach einen festen Zeitintervall, z.B. alle 5 Sekunden). Dadurch wird erreicht, dass unterschiedliche Aspekte des Erkennens des Personendetektors regelmäßig geprüft werden (z.B. wird mindestens einmal pro Stunde geprüft, ob der Personendetektor eine männliche Person im Overall erkennt, die einen Helm trägt und Arbeiten am Boden ausführt).

Auch wäre es möglich, in einer weiteren vorteilhaften Ausbildung die verschiedenen Kriterien während der Laufzeit zufällig miteinander zu kombinieren. Dies ist insbesondere dann sinnvoll, wenn die Anzahl der möglichen Kombinationen so groß ist, dass eine systematische Generierung aller Kombinationen nicht mehr möglich ist.

Eine weitere vorteilhafte Ausprägung wäre es, die verschiedenen Kriterien während der Laufzeit so zu kombinieren, dass zumindest alle möglichen Paare von zwei Kriterien (z.B. Personentyp und Kleidung oder Kleidung und mitgeführte Ausrüstung) pro Zeiteinheit mindestens einmal vorkommen. Die übrigen Kriterien werden dann wiederum zufällig gewählt.

Eine weitere Möglichkeit wäre es, dass die Diagnoseeinheit bzw. der Phantombildgenerator nur Phantome an Positionen generiert, an denen sich keine echten Personen befinden, um die Erkennungsqualität der echten Personen möglichst wenig zu beeinflussen.

Die Zuweisungseinheit könnte beispielsweise ein RundlaufVerfahren (Round-Robin) verwenden, dabei können mögliche Fehler, welche zwischen den Kameras und den künstlichen neuronalen Netzwerken bestehen, aufgedeckt werden. Das RundlaufVerfahren besteht darin, dass die Zuordnung zwischen Kamera und künstlichen neuronalem Netzwerk nicht statisch festgelegt wird, sondern sich auf Anforderung der Diagnoseeinheit regelmäßig ändert. Z.B. für jedes Bild oder nach einen zuvor festgelegten Zeitintervall. Bei jedem Wechsel hat die Diagnoseeinheit eine feste Erwartungshaltung aus dem letzten Zyklus, der auf dem jeweils anderen künstlichen neuronalen Netzwerk ermittelt wurde. Stimmt die Erwartung nicht mit der Ausgabe des Personendetektors überein, kann ein Ausfall signalisiert werden.

Durch die Kontrolle des Rundlauf-Verfahrens durch die Diagnoseeinheit können so weitere Fehler aufgedeckt werden. Da die Diagnoseeinheit wiederum in sicherer F-Technik nach der IEC-Norm 61508 realisiert ist, kann es deshalb nicht vorkommen, dass das Rundlaufverfahren durch einen Fehler einfriert und nicht mehr wirksam ist.

Ein weiteres Maß an Sicherheit erreicht man, wenn in dem System der bildgebende Sensor, vorzugsweise die Kamera oder das Laser-Sensor-System, mit einem Aktor ausgestaltet ist und die Diagnoseeinheit ausgestaltet ist, über Steuerbefehle den Aktor derart anzusteuern, dass sich ein Ausschnitt, vorzugsweise ein Kameraausschnitt oder ein Laser-Scanbereich des Überwachungsbereichs, um einen vorgegebenen Bereich ändert, wobei diese Änderung als eine fünfte Zusatzinformation in der Diagnoseeinheit auswertbar ist.

Mit dem Aktor kann dann ein Kameraausschnitt regelmäßig geändert werden. Der Motor könnte auch z.B. die Brennweite, die Blickrichtung oder die Position der Kamera verändern. Die Veränderung sollte gering sein, so dass die Kamera in allen Fällen den zu überwachenden Bereich immer im Bildbereich hat. Steht eine Person z.B. an derselben Stelle, muss der Personendetektor in Abhängigkeit zum aktuellen Kameraausschnitt dennoch stets eine leicht unterschiedliche Position liefern. Dies kann als die fünfte Zusatzinformation ausgewertet werden. Auf diese Weise können z.B. Fehler, bei denen das Kamerabild eingefroren ist, sicher erkannt werden.

Die Kontrolle über den aktuellen Überwachungsbereich bzw. Bildbereich liegt in der Verantwortung der Diagnoseeinheit. Dieser wählt einen Blickwinkel aus, sendet die entsprechenden Signale an den Aktor, und kann die vom Personendetektor gelieferte Positionen entsprechend korrigieren.

Um eine Rechtzeitigkeit des Überwachungssystems zu überprüfen ist das Überwachungssystem mit einem Anzeigegerät im Überwachungsbereich ausgestaltet, wobei das Anzeigegerät derart angeordnet ist, dass der bildgebende Sensor, vorzugsweise die Kamera oder das Laser-Sensor-System, eine Anzeige des Anzeigegerätes erfasst, die Diagnoseeinheit ist weiterhin dazu ausgestaltet auf dem Anzeigegerät eine Symbolsequenz als Anzeige auszugeben, wobei die Auswerteeinheit ausgestaltet ist, diese Symbolsequenz zu erkennen und dies als sechste Zusatzinformation der Diagnoseeinheit mitzuteilen.

Die Diagnoseeinheit kann z.B. eine Anzeige einer Symbolsequenz (z.B. dreistellige Zahlen) veranlassen, dieses wird auf dem Anzeigegerät zur Anzeige gebracht und kann von der Kamera erfasst werden und in der Auswerteeinheit durch das künstliche neuronale Netzwerk muss diese Symbolsequenz erkannt werden. Auf diese Weise kann die Diagnoseeinheit überprüfen, ob der Personendetektor tatsächlich mit den realen Bilddaten arbeitet.

In einer weiteren vorteilhaften Ausprägung veranlasst die Diagnoseeinheit eine regelmäßige Änderung der angezeigten Symbolsequenz. Dadurch kann überprüft werden, ob der Personendetektor mit aktuellen Bildinformationen arbeitet. Außerdem kann auf diese Weise die Reaktionszeit des Personendetektors zur Laufzeit kontinuierlich überprüft werden.

Die Zeichnung zeigt mehrere Ausführungsbeispiele und Ausgestaltungen der Erfindung. Dabei zeigt die
- FIG 1: ein Überwachungssystem mit den wesentlichen drei Komponenten,
- FIG 2: das Überwachungssystem in einer zweikanaligen Ausgestaltung mit einem Kreuzvergleich,
- FIG 3: das Überwachungssystem mit einer Möglichkeit Phantombildern einzuspeisen,
- FIG 4: das Überwachungssystem mit dem Einsatz eines Round-Robin-Verfahrens,
- FIG 5: das Überwachungssystem mit der Möglichkeit über einen Motor eine Kameraeinstellung zu verändern,
- FIG 6: das Überwachungssystem mit einem zusätzlichen Einblenden einer Symbolsequenz und
- FIG 7: eine Diagnoseeinheit mit der Prüfeinheit und den auszuwertenden Zusatzinformationen.

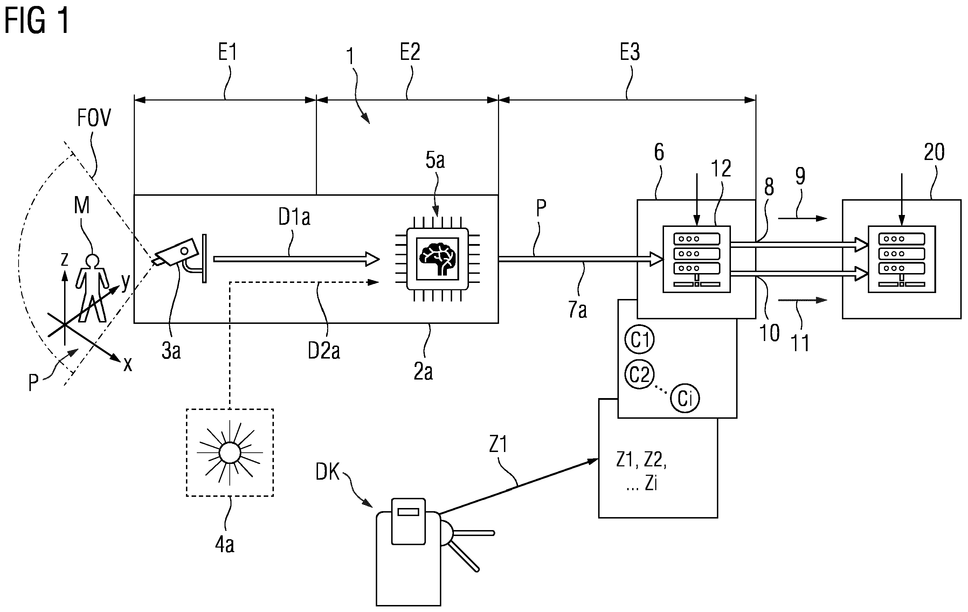

Gemäß FIG 1 ist ein Überwachungssystem 1 in drei wesentlichen Komponenten unterteilt. Eine erste Komponente E1 bildet eine erste Kamera 3a, eine zweite Komponente E2 bildet eine erste Auswerteeinheit 5a und eine dritte Komponente E3 bildet eine Diagnoseeinheit 6. Das Überwachungssystem 1 ist damit mit einem ersten Personendetektor 2a ausgestaltet. Der Personendetektor 2a weist die erste Kamera 3a zur Aufnahme von digitalen Bilddateien D1a auf. Optional kann der Personendetektor 2a auch ein Laser-Sensor-System 4a zur Aufnahme von Punktewolken D2a aufweisen. Die erste Auswerteeinheit 5a ist ausgestaltet, die Bilddateien D1a oder die Punktewolken D2a auszuwerten und eine Positionsangabe P einer in einem Überwachungsbereich FOV erkannten Person M auszugeben.

Das Überwachungssystem 1 umfassend die erste Komponente E1 und die zweite Komponente E2 ist gemäß dem Stand der Technik bekannt. Erfindungsgemäß wird dem Überwachungssystem 1 nun die dritte Komponente E3 als Diagnoseeinheit 6 hinzugefügt. Die Diagnoseeinheit 6 prüft die Ausgaben der Auswerteeinheit 5a auf Plausibilität. Die Auswerteeinheit 5a ist als ein künstliches neuronales Netzwerk KNN ausgestaltet und dieses arbeitet vorteilhafterweise zustandslos, welches den späteren Plausibilitätsprüfungen zu Nutze kommt. Um die Daten entgegenzunehmen, weist die Diagnoseeinheit 6 einen ersten Eingangskanal 7a auf. Über den Eingangskanal 7a wird die Positionsangabe P empfangen. An einem ersten Ausgang 8 kann die Diagnoseeinheit 6 ein Bestätigungssignal 9 der Positionsangabe P der erkannten Person M ausgeben. An einem zweiten Ausgang 10 für ein Fehlersignal 11 kann die Diagnoseeinheit 6 ein Fehlersignal 11 ausgeben. Die Diagnoseeinheit 6 ist ausgestaltet mit einer Prüfeinheit 12 die Ausgabe der Positionsangabe P der erkannten Person M mit einer Mehrzahl an Plausibilitätskriterien C1,..,Ci auf Plausibilität zu überprüfen. Weiterhin ist die Diagnoseeinheit 6 mit der Prüfeinheit 12 ausgestaltet, für den Fall, dass mindestens ein Plausibilitätskriterium C1, ..,Ci verletzt ist, einen Fehler zu erkennen und das Fehlersignal 11 am zweiten Ausgang 10 auszugeben.

Die Diagnoseeinheit 6 bzw. die Prüfeinheit 12 ist weiterhin ausgestaltet, Zusatzinformationen Z1,..., Zi entgegenzunehmen und auszuwerten und in die Plausibilitätsprüfung mit einzubeziehen. Eine erste Zusatzinformation Z1 wird über ein Drehkreuz DK der Diagnoseeinheit 6 zugeführt. Das Drehkreuz DK ermittelt die Anzahl der sich ihm zu überwachenden Bereich befindenden Personen. Befinden sich beispielsweise zwei Personen im zu überwachenden Bereich, muss der Personendetektor 2a auch immer genau zwei Personen melden. Mit dieser ersten Zusatzinformation Z1 kann dann die Diagnoseeinheit 6 Fehler feststellen.

Zur besseren Entscheidungsfindung kann dem Überwachungssystem 1 noch eine Entscheidungseinheit 20 nachgeordnet sein. Die Entscheidungseinheit 20 nimmt das Bestätigungssignal 9 und das Fehlersignal 11 entgegen. Hat die Diagnoseeinheit 6 einen Fehler erkannt, so kann die Entscheidungseinheit 20 entscheiden, diesen Fehler zunächst zu tolerieren, z.B. wenn eine Person in genau einem Bild fehlt, aber unmittelbar in dem nächsten Bild an derselben Stelle wieder detektiert wird. Andernfalls kann die nachgelagerte Entscheidungseinheit 20 auch einen gefährlichen Ausfall des Personendetektors signalisieren.

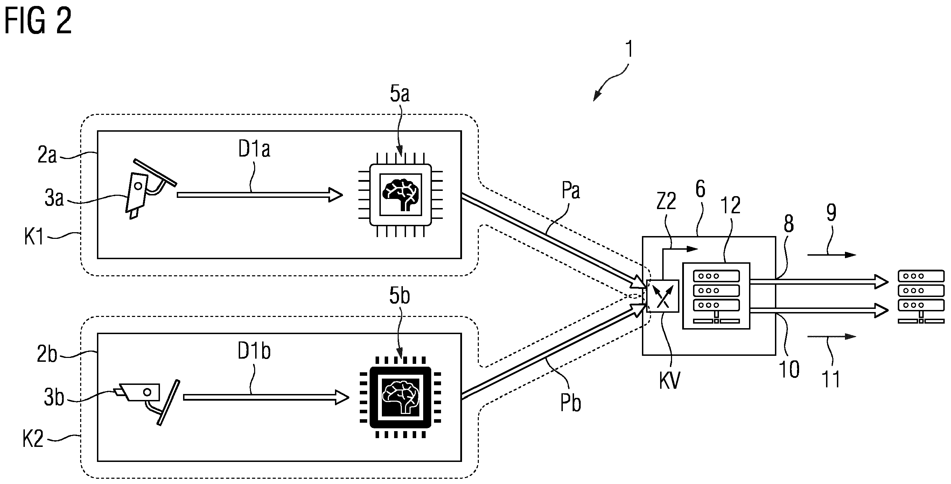

Mit der FIG 2 wird die Möglichkeit aufgezeigt eine zweite Zusatzinformation Z2 über einen Kreuzvergleich zwischen einem ersten Kanal K1 von einem ersten Personendetektor 2a und einem zweiten Kanal 2 von einem zweiten Personendetektor 2a für die Positionsdaten P heranzuziehen. Der erste Kanal K1 und der zweite Kanal K2 sind diversitär zueinander ausgestaltet. Ein Kreuzvergleichsmittel KV vergleicht ständig die ersten Positionsdaten Pa und die zweiten Positionsdaten Pb und generiert daraus die zweite Zusatzinformation Z2. Zufällige Hardwarefehler in den einzelnen Komponenten E1,E2 könnten dann aufgedeckt werden.

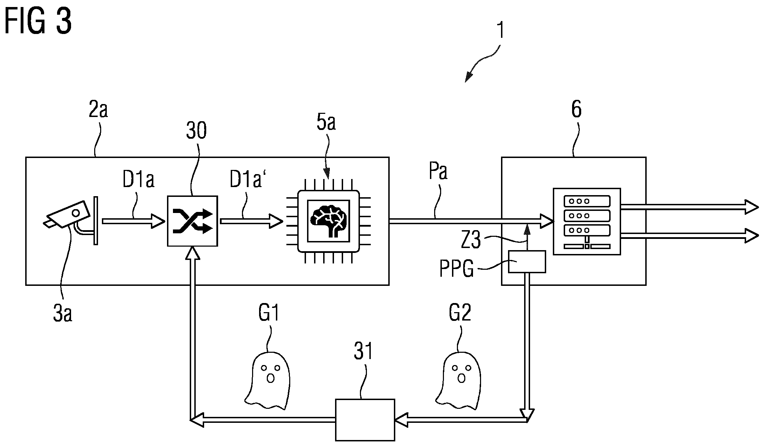

Die FIG 3 zeigt die Möglichkeit auf, eine dritte Zusatzinformation Z3 durch die Bildung von Phantombildern G1,G2 zu generieren. Der Personendetektor 2a weist dazu eine Bildmischeinheit 30 auf, welche ausgestaltet ist das Phantombild G1,G2 in die Bilddateien D1a einzublenden, wodurch ein aktuelles Kamerabild durch das Phantombild G1,G2 überlagert wird und damit eine dritte Zusatzinformation Z3 in der Diagnoseeinheit 6 auswertbar ist. Die Diagnoseeinheit 6 weist dazu einen Phantombildgenerator PBG auf. Der Phantombildgenerator PBG generiert beispielsweise ein erstes Phantombild G1 und ein zweites Phantombild G2. Die Phantombilder G1,G2 werden über eine Wiedergabeeinheit 31 derart aufbereitet, dass sie in der Bildmischeinheit 30 entsprechend verarbeitet werden können.

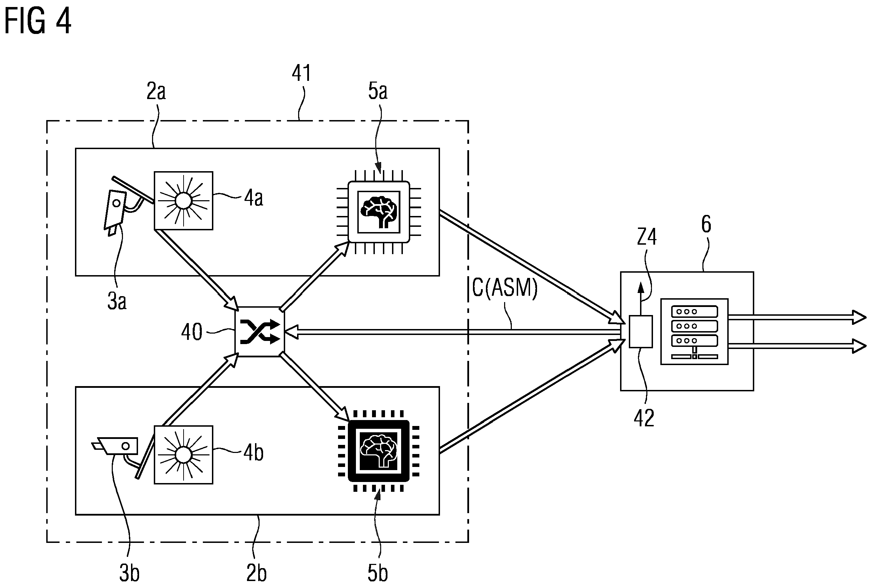

Eine weitere Möglichkeit das Erkennen von Fehlern zu verbessern zeigt die FIG 4. Das Überwachungssystem 1 gemäß FIG 2 mit einem ersten Kanal K1 und einem zweiten Kanal K2 weist nun eine Zuweisungseinheit 40 auf. Die Zuweisungseinheit 40 ist ausgestaltet, in einem Verbund 41 von dem ersten Personendetektor 2a und dem zweiten Personendetektor 2b ein Kontrollsignal C von der Diagnoseeinheit 6 entgegenzunehmen, wobei der erste Personendetektor 2a mit einer ersten Kamera 3a zur Aufnahme von digitalen Bilddateien D1a und mit einer ersten Auswerteeinheit 5a ausgestaltet ist. Der zweite Personendetektor 2b ist mit einer zweiten Kamera 3b und einer zweiten Auswerteeinheit 5b ausgestaltet. Die Diagnoseeinheit 6 ist dabei ausgestaltet das Kontrollsignal C derart zu generieren, dass eine Zuordnung ASM von der ersten Kamera 3 zu der ersten Auswerteeinheit 5a oder zu der zweiten Auswerteeinheit 5b gegeben ist. Die Zuordnung ASM kann weiter beinhalten, dass die zweite Kamera 3b der ersten Auswerteeinheit 5a zugeordnet ist. Die Zuordnung ASM wird also von dem Kontrollsignal C, welches in der Diagnoseeinheit 6 generiert wird, vorgegeben. Die Diagnoseeinheit 6 ist dazu ausgestaltet mit dieser Vorgabe mit einer Änderung der Zuordnung ASM mit einer Erwartungshaltung eine vierte Zusatzinformation Z4 zu generieren. Die Diagnoseeinheit 6 ist derart ausgestaltet, dass sie nach jedem Wechsel der Zuordnung ASM eine Erwartungshaltung aus den erkannten Positionseingaben P aus der vorangegangenen Zuordnung ASM mit den erkannten Positionseingaben P aus der gerade bestehenden Zuordnung ASM vergleichen kann. Stimmt die Erwartungshaltung nicht überein wird das Fehlersignal 11 ausgegeben.

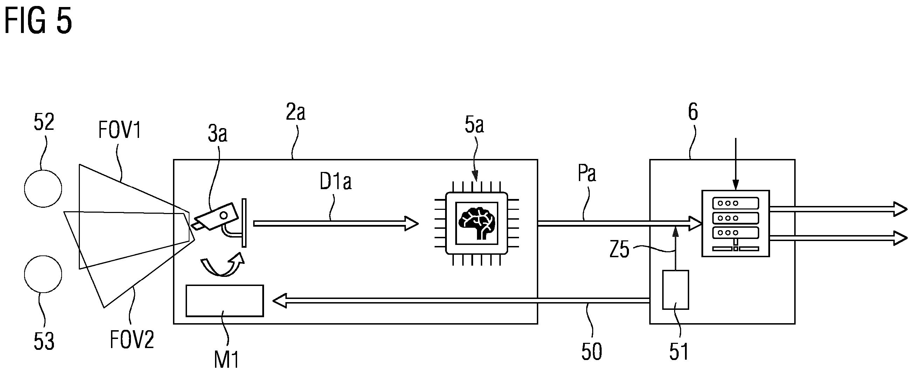

Die FIG 5 zeigt eine weitere Maßnahme, um die Fehlererkennung zu verbessern. Das Überwachungssystem 1 weist nun einen Aktor M1 auf, welcher ausgestaltet ist auf die Kamera 3a derart einzuwirken, dass sich ein Kameraausschnitt 52 oder ein Laserscanbereich 53 des Überwachungsbereiches FOV um einen vorgegebenen Bereich ändert. Z.B. kann sich ein erster Überwachungsbereich FOV1 und ein zweiter Überwachungsbereich FOV2 aufspannen. Die Diagnoseeinheit 6 ist ausgestaltet, über Steuerbefehle 50 den Aktor M1 derart anzusteuern, dass sich der Kameraausschnitt um einen vorgegebenen Bereich ändert, wobei diese Änderung als eine fünfte Zusatzinformation Z5 in der Diagnoseeinheit 6 auswertbar ist.

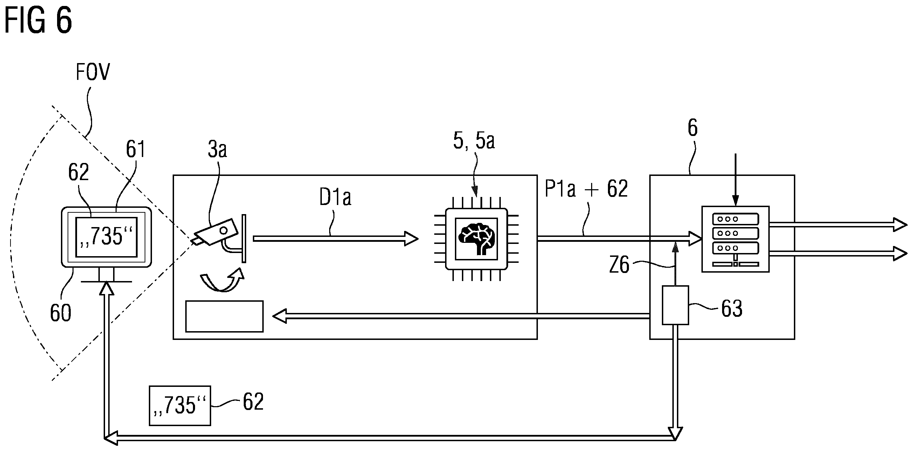

Eine weitere Maßnahme wird mit FIG 6 dargestellt. In dem Überwachungsbereich FOV wird ein Anzeigegerät 60 derart angeordnet, dass die Kamera 3a eine Anzeige 61 des Anzeigegeräts 60 erfasst. Die Diagnoseeinheit 60 ist weiterhin dazu ausgestaltet, auf dem Anzeigegerät 60 eine Symbolsequenz 62 als Anzeige 61 auszugeben. Die Auswerteeinheit 5 ist ausgestaltet, diese Symbolsequenz 62 "735" zu erkennen und dies als sechste Zusatzinformation Z6 der Diagnoseeinheit 6 mitzuteilen.

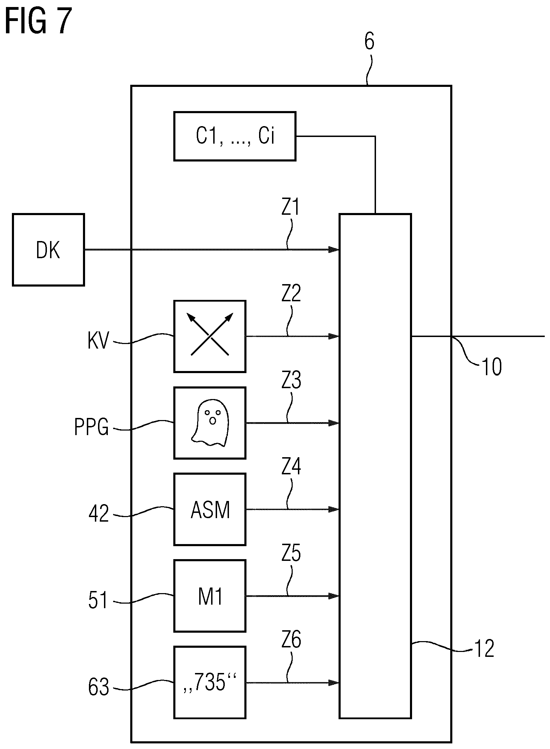

Zusammenfassend kann in der FIG 7 eine Diagnoseeinheit 6 gezeigt werden, welche durch die Prüfeinheit 12 alle Plausibilitätsprüfungen C1,..,Cn und alle Zusatzinformationen Z1,..., Z6 auswertet.

## Patentansprüche

1. Überwachungssystem (1) mit einem ersten Personendetektor (2a), welcher ausgestaltet ist
- mit einem bildgebenden Sensor zur Aufnahme von digitalen Bilddateien (D1a) oder von Punktewolken (D2a) und
- mit einer Auswerteeinheit (5a), welche ausgestaltet ist die Bilddateien (D1a) oder die Punktewolken (D2a) auszuwerten und eine Positionsangabe (P) einer in einem Überwachungsbereich (FOV) erkannten Person (M) auszugeben, weiterhin mit
- einer Diagnoseeinheit (6) mit einem ersten Eingangskanal (7a) um die Positionsangabe (P) zu empfangen und einem ersten Ausgang (8) für eine geprüfte Positionsangabe (P) der erkannten Person (M) und einem zweiten Ausgang (10) für ein Fehlersignal (11), wobei die Diagnoseeinheit (6) ausgestaltet ist mit einer Prüfeinheit (12) die Ausgabe der Positionsangabe (P) der erkannten Person (M) mit einer Mehrzahl an Plausibilitätskriterien (C1,..,Ci) auf Plausibilität zu überprüfen, weiterhin ausgestaltet für den Fall, dass wenn mindestens ein Plausibilitätskriterium (C1,..,Ci) verletzt ist einen Fehler zu erkennen und das Fehlersignal (11) am zweiten Ausgang (10) auszugeben,
wobei die Diagnoseeinheit (6) weiterhin ausgestaltet ist Zusatzinformationen (Z1,..., Zi) entgegen zu nehmen und auszuwerten und in die Plausibilitätsprüfung mit einzubeziehen, weiterhin mit einem weiteren Personendetektor (2b), wobei die Diagnoseeinheit (6) ausgestaltet ist als eine Zusatzinformation (Z2) einen Kreuzvergleich zwischen einem ersten Kanal (K1) von einem ersten Personendetektor (2a) und einem zweiten Kanal (K2) von einem zweiten Personendetektor (2b) für die Positionsdaten (P) heranzuziehen, wobei die Kanäle (K1,K2) diversitär zueinander ausgestaltet sind,
**dadurch gekennzeichnet, dass** eine Zuweisungseinheit (40) vorhanden ist, welche ausgestaltet ist in einem Verbund (41) von dem ersten Personendetektor (2a) und dem zweiten Personendetektor (2b) ein Kontrollsignal (C) von der Diagnoseeinheit (6) entgegenzunehmen, wobei
- der erste Personendetektor (2a) mit einem ersten bildgebenden Sensor zur Aufnahme von digitalen Bilddateien (D1a) oder Punktewolken (D2a) und mit einer ersten Auswerteeinheit (5a) ausgestaltet ist,
- der zweite Personendetektor (2a) mit einem zweiten bildgebenden Sensor zur Aufnahme von digitalen Bilddateien (D1a) oder Punktewolken (D2b) und mit einer zweiten Auswerteeinheit (5b) ausgestaltet ist,
die Diagnoseeinheit (6) ist dabei ausgestaltet das Kontrollsignal (C) derart zu generieren, dass eine Zuordnung (ASM) von dem ersten bildgebenden Sensor zu der ersten Auswerteeinheit (5a) oder der zweiten Auswerteeinheit (5a) oder eine Zuordnung (ASM) von dem zweiten bildgebenden Sensor zu der ersten Auswerteeinheit (5a) oder der zweiten Auswerteeinheit (5a) von dem Kontrollsignal (C) vorgegeben ist, und weiterhin ist die Diagnoseeinheit ausgestaltet mit dieser Vorgabe nach einer Änderung der Zuordnung (ASM) mit einer Erwartungshaltung eine vierte Zusatzinformation zu generieren, denn die Diagnoseeinheit (6) ist derart ausgestaltet, dass nach jedem Wechsel der Zuordnung (ASM) eine Erwartungshaltung aus den erkannten Positionsangaben (P) aus der vorangegangenen Zuordnung (ASM) mit den erkannten Positionsangaben (P) aus der gerade bestehenden Zuordnung (ASM) verglichen wird, stimmt die Erwartungshaltung nicht überein, wird das Fehlersignal (11) ausgegeben.

2. Überwachungssystem (1) nach Anspruch 1, wobei die Diagnoseeinheit (6) ausgestaltet ist als eine erste Zusatzinformation (Z1) eine Anzahl der sich im zu überwachenden Überwachungsbereich (FOV) befindenden Personen auszuwerten.

3. Überwachungssystem (1) nach einem der Ansprüche 1 oder 2, wobei die Diagnoseeinheit (6) ausgestaltet ist ein Phantombild (G1, G2) zu generieren, dabei weist der Personendetektor (2) eine Bildmischeinheit (30) auf, welche ausgestaltet ist das Phantombild (G1, G2) in die Bilddateien (D1a) einzublenden, wodurch ein aktuelles Kamerabild durch das Phantombild (G1, G2) überlagert wird und damit eine weitere Zusatzinformation (Z3) auswertbar ist.

4. Überwachungssystem (1) nach einem der Ansprüche 1 bis 3, wobei der bildgebende Sensor mit einem Aktor (M1) ausgestaltet ist und die Diagnoseeinheit (6) ausgestaltet ist über Steuerbefehle (50) den Aktor (M1) derart anzusteuern, dass sich ein Ausschnitt des Überwachungsbereichs (FOV) um einen vorgegebenen Bereich ändert, wobei diese Änderung als eine fünfte Zusatzinformation (Z5) in der Diagnoseeinheit (6) auswertbar ist.

5. Überwachungssystem (1) nach einem der Ansprüche 1 bis 4, wobei in dem Überwachungsbereich (FOV) ein Anzeigegerät (60) derart angeordnet ist, dass der bildgebende Sensor eine Anzeige (61) des Anzeigegeräts (60) erfasst, die Diagnoseeinheit (6) ist weiterhin dazu ausgestaltet auf dem Anzeigegerät (60) eine Symbolsequenz (62) als Anzeige (61) auszugeben, wobei die Auswerteeinheit (5) ausgestaltet ist diese Symbolsequenz (62) zu erkennen und dies als sechste Zusatzinformationen (Z6) der Diagnoseeinheit (6) mitzuteilen.

6. Überwachungssystem (1) nach einem der Ansprüche 1 bis 5, **dadurch gekennzeichnet, dass** die Diagnoseeinheit (6) als ein Industriecontroller ausgestaltet ist, welcher der Norm IEC 61508 zertifiziert ist und damit als eine auf funktionale Sicherheit ausgelegte Steuerung ausgestaltet ist.

7. Überwachungssystem (1) nach einem der Ansprüche 1 bis 6, wobei die Diagnoseeinheit ausgestaltet ist folgende Plausibilitätsprüfungen durchzuführen:
a) Erkennen von Personen, die in der Mitte des Bildes erscheinen oder verschwinden,
b) Erkennen von sprunghaften Positionsänderungen,
c) Erkennen von Geschwindigkeiten von Personen, die größer sind als 2m/s,
d) Erkennen von Personen in Bereichen mit Zutrittsbeschränkungen und
e) Erkennen von Personen an Positionen, die physikalisch unmöglich sind.

## Claims

1. Monitoring system (1) having a first person detector (2a), which is designed
- having an imaging sensor for recording digital image files (D1a) or point clouds (D2a) and
- having an evaluation unit (5a), which is designed so as to evaluate the image files (D1a) or the point clouds (D2a) and so as to output a position indication (P) of a person (M) that is recognised in a monitored area (FOV), furthermore having
- a diagnostic unit (6) having a first input channel (7a) in order to receive the position indication (P) and a first output (8) for a checked position indication (P) of the recognised person (M) and a second output (10) for an error signal (11), wherein the diagnostic unit (6) is designed having a checking unit (12) so as to check the output of the position indication (P) of the recognised person (M) for plausibility using a plurality of plausibility criteria (C1,..., Ci), further designed in the event that at least one plausibility criterion (C1,..,Ci) is violated, so as to recognise an error and to output the error signal (11) at the second output (10),
wherein the diagnostic unit (6) is further designed so as to receive and evaluate additional information (Z1,...,Zi) and so as to include the additional information in the plausibility check, and further having a further person detector (2b), wherein the diagnostic unit (6) is designed so as to use a cross comparison between a first channel (K1) from a first person detector (2a) and a second channel (K2) from a second person detector (2b) as additional information (Z2) for the position data (P), wherein the channels (K1,K2) are designed so as to be diverse with respect to one another,
**characterised in that**
an assigning unit (40) is provided, which is designed so as to receive a control signal (C) from the diagnostic unit (6) in a combination (41) of the first person detector (2a) and the second person detector (2b), wherein
- the first person detector (2a) is designed having a first imaging sensor for recording digital image files (D1a) or point clouds (D2a) and having a first evaluation unit (5a),
- the second person detector (2a) is designed having a second imaging sensor for recording digital image files (D1a) or point clouds (D2b) and having a second evaluation unit (5b),
the diagnostic unit (6) is designed so as to generate the control signal (C) in such a manner that an assignment (ASM) of the first imaging sensor to the first evaluation unit (5a) or the second evaluation unit (5a), or an assignment (ASM) of the second imaging sensor to the first evaluation unit (5a) or the second evaluation unit (5a) is specified by the control signal (C), and furthermore, the diagnostic unit is designed so as to use this specification to generate a fourth item of additional information after a change in the assignment (ASM) with an expectation, because the diagnostic unit (6) is designed so that, after each change in the assignment (ASM),
an expectation from the recognised position indication (P) from the preceding assignment (ASM) is compared with the recognised position indication (P) from the currently existing assignment (ASM), if the expectation does not match, the error signal (11) is output.

2. Monitoring system (1) according to claim 1, wherein the diagnostic unit (6) is designed so as to evaluate, as first additional information (Z1), a number of the persons that are located in the monitored area (FOV) being monitored.

3. Monitoring system (1) according to one of claims 1 or 2, wherein the diagnostic unit (6) is designed so as to generate a phantom image (G1, G2), in this case the person detector (2) has an image mixing unit (30) which is designed so as to overlay the phantom image (G1, G2) into the image files (D1a), as a result of which a current camera image is superimposed by the phantom image (G1, G2) and further additional information (Z3) can thus be evaluated.

4. Monitoring system (1) according to one of claims 1 to 3, wherein the imaging sensor is designed having an actuator (M1), and the diagnostic unit (6) is designed so as to control the actuator (M1) via control commands (50) in such a manner that a section of the monitored area (FOV) changes by a predetermined range, wherein this change can be evaluated as a fifth item of additional information (Z5) in the diagnostic unit (6).

5. Monitoring system (1) according to one of claims 1 to 4, wherein a display device (60) is arranged in the monitored area (FOV) in such a manner that the imaging sensor detects a notification (61) of the display device (60), the diagnostic unit (6) is furthermore designed so as to output a symbol sequence (62) as a notification (61) on the display device (60), wherein the evaluation unit (5) is designed so as to recognise this symbol sequence (62) and so as to communicate this as a sixth item of additional information (Z6) to the diagnostic unit (6).

6. Monitoring system (1) according to one of claims 1 to 5, **characterised in that** the diagnostic unit (6) is designed as an industrial controller that is certified according to the IEC 61508 standard and is thus designed as a controller that is designed for functional safety.

7. Monitoring system (1) according to one of claims 1 to 6, wherein the diagnostic unit is designed so as to perform the following plausibility checks:
a) recognising persons that appear or disappear in the centre of the image,
b) recognising sudden changes in position,
c) recognising speeds of persons, which are greater than 2m/s,
d) recognising persons in areas with access restrictions and
e) recognising persons in positions that are physically impossible.

## Revendications

1. Système (1) de surveillance comprenant un premier détecteur (2a) de personnes, qui est conformé
- en ayant un capteur d'imagerie pour l'enregistrement de fichiers (D1a) d'image numériques ou de nuages (D2a) de points et
- en ayant une unité (5a) d'évaluation, qui est conformée pour évaluer les fichiers (D1a) d'image ou les nuages (D2a) de points et pour donner une indication (P) de position d'une personne (M) identifiée dans une zone (FOV) de surveillance, comprenant en outre
- une unité (6) de diagnostic ayant un premier canal (7a) d'entrée pour recevoir l'indication (P) de position et une première sortie (8) pour une indication (P) de position contrôlée de la personne (M) identifiée et une deuxième sortie (10) pour un signal (11) de défaut, dans lequel l'unité (6) de diagnostic est conformée en ayant une unité (12) de contrôle, qui contrôle, par une pluralité de critères (C1, .., Ci) de vraisemblance, la vraisemblance de l'indication (P) de position de la personne (M) identifiée, conformée en outre, pour le cas où il est porté atteinte à au moins un critère (C1, ..., Ci) de vraisemblance, identifier un défaut et envoyer le signal (11) de défaut à la deuxième sortie (10),
dans lequel l'unité (6) de diagnostic est conformée en outre pour recevoir des informations (Z1, ..., Zi) supplémentaires et les évaluer et les incorporer au contrôle de vraisemblance, comprenant en outre un autre détecteur (2b) de personnes, dans lequel l'unité (6) de diagnostic est conformée pour tirer parti, pour les données (P) de position, d'une comparaison croisée entre un premier canal (K1) d'un premier détecteur (2a) de personnes et un deuxième canal (K2) d'un deuxième détecteur (2b) de personnes, dans lequel les canaux (K1, K2) sont conformés de manière diverse l'un de l'autre, **caractérisé en ce qu'**
il y a une unité (40) d'affectation, qui est conformée pour recevoir, en une combinaison (41) du premier détecteur (2a) de personnes et du deuxième détecteur (2b) de personnes, un signal (C) de commande de l'unité (6) de diagnostic, dans lequel
- le premier détecteur (2a) est conformé en ayant un premier capteur d'imagerie pour l'enregistrement de fichiers (D1a) d'image numériques ou de nuages (D2a) de points et en ayant une première unité (5a) d'évaluation,
- le deuxième détecteur (2a) de personnes est conformé en ayant un deuxième capteur d'imagerie pour l'enregistrement de fichiers (D1a) d'image numériques ou de nuages (D2b) de points et en ayant une deuxième unité (5b) d'évaluation,
l'unité (6) de diagnostic est conformée pour produire le signal (C) de commande, de manière à ce qu'une affectation (ASM) du premier capteur d'imagerie à la première unité (5a) d'évaluation ou à la deuxième unité (5a) d'évaluation ou une affectation (ASM) du deuxième capteur d'imagerie à la première unité (5a) d'évaluation ou à la deuxième unité (5a) d'évaluation soit donnée à l'avance par le signal (C) de commande, et en outre, l'unité de diagnostic est conformée pour produire, par cette donnée à l'avance après une modification de l'affectation (ASM) avec une attitude d'attente, une quatrième information supplémentaire, car l'unité (6) de diagnostic est conformée, de manière à ce que, après chaque changement de l'affectation (ASM), une attitude d'attente à partir des indications (P) de position identifiées à partir de l'affectation (ASM) précédente, soit comparée aux indications (P) de position identifiées à partir de l'affectation (ASM) existant, précisément si l'attitude d'attente ne coïncide pas, le signal (11) de défaut est donné.

2. Système (1) de surveillance suivant la revendication 1, dans lequel l'unité (6) de diagnostic est conformée pour évaluer, comme première information (Z1) supplémentaire, un nombre de personnes se trouvant dans la zone (FOV) de surveillance à surveiller.

3. Système (1) de surveillance suivant l'une des revendications 1 ou 2, dans lequel l'unité (6) de diagnostic est conformée pour produire une image (G1, G2) fantôme, le détecteur (2) de personnes a une unité (30) de mélange d'images, qui est conformé pour incorporer l'image (G1, G2) fantôme dans les fichiers (D1a), grâce à quoi une image en cours d'appareil photographique est superposée par l'image fantôme (G1, G2) et ainsi une autre information (Z3) supplémentaire peut être évaluée.

4. Système (1) de surveillance suivant l'une des revendications 1 à 3, dans lequel le capteur d'imagerie est conformé en ayant un actionneur (M1) et l'unité (6) de diagnostic est conformée, en commandant par des instructions (50) de commande l'actionneur (M1), de manière à modifier un segment de la zone (FOV) de surveillance d'une zone donnée à l'avance, dans lequel cette modification peut être évaluée, comme une cinquième information (Z5) supplémentaire, dans l'unité (6) de diagnostic.

5. Système (1) de surveillance suivant l'une des revendications 1 à 4, dans lequel, dans la zone (FOV) de surveillance, un appareil (60) d'indication est disposé de manière à ce que le capteur d'imagerie détecte une indication (61) de l'appareil (60) d'indication, l'unité (6) de diagnostic est conformée en outre pour donner, sur l'appareil (60) d'indication, une séquence (62) symbolique comme indication (61), dans lequel l'unité (5) d'évaluation est conformée pour identifier cette séquence (62) symbolique et en faire part, comme sixième information (Z6) supplémentaire, à l'unité (6) de diagnostic.

6. Système (1) de surveillance suivant l'une des revendications 1 à 5, **caractérisé en ce que** l'unité (6) de diagnostic est conformée en unité de commande industrielle, qui est certifiée suivant la norme IEC 61508 et est ainsi conformée sous la forme d'une commande conçue en sécurité fonctionnelle.

7. Système (1) de surveillance suivant l'une des revendications 1 à 6, dans lequel l'unité de diagnostic est conformée pour effectuer les contrôles de vraisemblance suivants :
a) identification de personnes, qui apparaissent ou disparaissent au milieu de l'image,
b) détection de variations brusques de position,
c) détection de vitesses de personnes, qui sont plus grandes que 2 m/s,
d) identification de personnes dans des zones ayant des limitations à l'entrée et
e) identification de personnes en des positions, qui sont impossibles physiquement.
